# EUROPÄISCHE PATENTSCHRIFT

(11) **EP 2 986 927 B1**
(45) Veröffentlichungstag und Bekanntmachung des Hinweises auf die Patenterteilung: **27.12.2017**
(21) Anmeldenummer: 14725605.1
(22) Anmeldetag: 07.04.2014
(51) Int. Cl.: F41A 23/26, B60R 7/14

(54) **VERSTAUVORRICHTUNG ZUR LAGEGESICHERTEN VERSTAUUNG EINES AUSRÜSTUNGSGEGENSTANDS, INSBESONDERE EINER WAFFE**
STOWAGE DEVICE FOR POSITIONALLY SECURED STOWING OF AN ITEM OF EQUIPMENT, PARTICULARLY A WEAPON
DISPOSITIF D'ARRIMAGE POUR L'ARRIMAGE, EN POSITION SÛRE, D'UN ARTICLE D'ÉQUIPEMENT, EN PARTICULIER D'UNE ARME

(30) Priorität: 17.04.2013 DE 102013103855
(43) Veröffentlichungstag der Anmeldung: 24.02.2016
(73) Patentinhaber: Krauss-Maffei Wegmann GmbH & Co. KG, 80997 München (DE)
(72) Erfinder: PRUMMENBAUM, Eric, 34127 Kassel (DE); AST, Werner, 34127 Kassel (DE)
(74) Vertreter: Feder Walter Ebert
(86) Internationale Anmeldenummer: PCT/DE2014/100120
(87) Internationale Veröffentlichungsnummer: WO 2014/169899

(56) Entgegenhaltungen:
- DE-A1- 2 652 591
- DE-A1-102010 036 789
- DE-C1- 19 958 990
- FR-A1- 2 962 633
- US-A1- 2006 243 770
- US-A1- 2010 107 465
- US-B1- 6 330 815

## Beschreibung

Die Erfindung betrifft eine Verstauvorrichtung zur lagegesicherten Verstauung eines Ausrüstungsgegenstands, insbesondere einer Waffe, an einem Objekt mit einem Aufnahmebereich zur Aufnahme des Ausrüstungsgegenstands und einem Montagebereich zur Montage der Verstauvorrichtung an dem Objekt.

Derartige Verstauvorrichtungen werden zum Verstauen von Ausrüstungsgegenständen, wie etwa Waffen, Sichtgeräten, Feuerlöschern, Staucontainern u. ä. Gegenständen, verwendet und häufig im Bereich militärischer Fahrzeuge eingesetzt. Da militärische Fahrzeuge insbesondere beim Durchfahren von unwegsamem Gelände größeren Beschleunigungen ausgesetzt sind, steigt in gewissen Situationen die Gefahr eines ungewollten Lösens der Ausrüstungsgegenstände, was zum Teil erhebliche Verletzungsrisiken für die Fahrzeugbesatzung mit sich bringt, weshalb sich insbesondere im militärischen Bereich besondere Anforderungen an die lagegesicherte Verstauung von Ausrüstungsgegenständen ergeben.

Aus der DE 10 2010 036 789 A1 ist eine Verstauvorrichtung bekannt, welche zur lagegesicherten Verstauung einer Waffe in einem militärischen Fahrzeug dient. Auf der Vorderseite weist die Verstauvorrichtung einen Aufnahmebereich auf, in welchem Waffen unterschiedlichen Typs über mehrere nach vorne in den Fahrzeuginnenraum hervorstehende Halteelemente lagegesichert verstaut werden können, so dass selbst bei schnellen Fahrten in unwegsamem Gelände ein ungewolltes Losreißen der Waffe nicht zu befürchten steht. Die Verstauvorrichtung selbst wird über mehrere Schraubbolzen mit dem Fahrzeug verschraubt, wozu ein rückseitiger Montagebereich vorgesehen ist, über welchen die Vorrichtung an einer Wand des Fahrzeugs anliegt.

Aus der US 2006/243770 A1 ist eine Verstauvorrichtung zur Verstauung eines Ausrüstungsgegenstands in einem Fahrzeug bekannt, welche einen Aufnahmebereich zur Aufnahme des Ausrüstungsgegenstands und einen Montagebereich zur Montage der Verstauvorrichtung an dem Objekt aufweist.

Diese Art der Verstauung von Ausrüstungsgegenständen hat sich in der Vergangenheit als sehr zuverlässig erwiesen, da selbst bei unterschiedlichen Arten von Waffen ein ungewolltes Lösen nicht möglich ist.

Als nachteilig hat sich jedoch herausgestellt, dass in militärischen Fahrzeugen in der Regel beengte Platzverhältnisse herrschen, weshalb die Verstauvorrichtung mit den vorstehenden Halteelementen in bestimmten Situationen als störend empfunden wird. Beispielsweise kann es in Notsituationen vorkommen, dass schwer verletzte Besatzungsmitglieder aus dem Fahrzeuginneren geborgen werden müssen. Hierbei sind die Verstauvorrichtungen oftmals im Weg, weshalb die Gefahr besteht, dass die verletzten Personen beispielsweise mit ihrer Kleidung an den Verstauvorrichtungen hängen bleiben, was die Bergung insgesamt sehr verkompliziert und ggf. sogar zusätzliche Verletzungen des Besatzungsmitglieds nach sich ziehen kann. Beim Notbergen ist es daher zumeist erforderlich, die Verstauvorrichtung zur Verbesserung der Platzverhältnisse zunächst zu demontieren, wonach erst dann mit der eigentlichen Bergung des Besatzungsmitglieds begonnen werden kann. Zur Demontage der Verstauvorrichtung müssen die einzelnen Schraubverbindungen zwischen der Verstauvorrichtung und dem jeweiligen Fahrzeug einzeln gelöst werden, wodurch im Notfall wertvolle Zeit zur Behandlung des Besatzungsmitglieds verloren gehen kann.

Vor diesem Hintergrund stellt sich die Erfindung die **Aufgabe**, eine Verstauvorrichtung anzugeben, bei der sich innerhalb kürzester Zeit verbesserte Platzverhältnisse schaffen lassen.

Bei einer Verstauvorrichtung der eingangs genannten Art wird die Aufgabe dadurch **gelöst**, dass der Aufnahmebereich und der Montagebereich über einen Entriegelungsmechanismus voneinander trennbar angeordnet sind, wobei der Entriegelungsmechanismus einen bewegbaren Riegelschieber aufweist, der mit einer feststehenden Riegelfalle zusammenwirkt, wobei ein zweiter Entriegelungsmechanismus vorgesehen ist und wobei die Verriegelungsrichtungen der Entriegelungsmechanismen quer zueinander ausgerichtet sind.

Durch Betätigung des Entriegelungsmechanismus kann der in das Fahrzeuginnere hineinragende Aufnahmebereich mit wenigen Handgriffen sehr rasch von dem weniger raumgreifenden Montagebereich getrennt werden, um beispielweise in Notsituationen verbesserte Platzverhältnisse zum Bergen verletzter Personen schaffen zu können. Zur Schaffung verbesserter Platzverhältnisse ist es nicht erforderlich, die Verstauvorrichtung insgesamt zu demontieren. Vielmehr reicht es aus, den raumgreifenderen Aufnahmebereich zu entfernen. Der weniger raumgreifende Montagebereich führt zu keiner nennenswerten Beeinträchtigung der Platzverhältnisse und kann an Ort und Stelle verbleiben. Es ergibt sich eine Verstauvorrichtung, bei welcher sich mit geringem Aufwand und wenigen Handgriffen verbesserte Platzverhältnisse schaffen lassen.

Bevorzugt ist der Entriegelungsmechanismus manuell entriegelbar ausgebildet, so dass es nicht erforderlich ist, zum Trennen des Aufnahmebereichs von dem Montagebereich ein Werkzeug zu verwenden. Hierdurch wird das Trennen des Aufnahmebereichs von dem Objekt nochmals erleichtert.

Vorteilhaft ist es ferner, wenn der Entriegelungsmechanismus derart ausgebildet ist, dass er bei Betätigung einen Formschluss zwischen dem Aufnahmebereich und dem Montagebereich löst. Die formschlüssige Verbindung des Aufnahmebereichs mit dem Montagebereich lässt sich schneller lösen als eine kraftschlüssige Verbindung, beispielsweise über eine Schraube. Im Vergleich zu einer Schraubverbindung ergibt sich somit eine Vereinfachung der Vorgänge beim Lösen der Verbindung.

Erfindungsgemäß weist der Entriegelungsmechanismus einen bewegbaren Riegelschieber auf, der mit einer feststehenden Riegelfalle zusammenwirkt. Über den Riegelschieber kann eine lösbare formschlüssige Verbindung des Aufnahmebereichs und des Montagebereichs hergestellt werden. Der bewegbare Riegelschieber kann zum Trennen und/oder Verriegeln des Aufnahmebereichs und des Montagebereichs insbesondere manuell bewegt werden und erleichtert daher das Trennen und/oder Verbinden der Bereiche. Zum Verriegeln kann der Riegelschieber in eine Öffnung der Riegelfalle eingeführt werden. Zum Trennen kann der Riegelschieber aus der Öffnung der Riegelfalle herausgezogen werden. Gemäß einer konstruktiven Ausgestaltung ist der Riegelschieber am Aufnahmebereich und die Riegelfalle am Montagebereich angeordnet. Alternativ ist es auch denkbar, dass der Riegelschieber am Montagebereich und die Riegelfalle am Aufnahmebereich angeordnet ist.

In diesem Zusammenhang hat es sich als besonders bevorzugt herausgestellt, wenn der Riegelschieber zwischen einer Riegelstellung und einer Offenstellung entgegen der Kraft einer sich spannenden Feder bewegbar ist. Durch die von der Feder ausgehende Kraft kann der Riegelschieber in der Riegelstellung einrasten. Zum Lösen des Aufnahmebereichs von dem Montagebereich kann der Riegelschieber in die Offenstellung überführt werden, wobei eine der Kraft der Feder entgegenwirkende Gegenkraft aufgebracht werden muss. Hierdurch kann ein unbeabsichtigtes Lösen der formschlüssigen Verbindung verhindert werden.

Erfindungsgemäß weist die Verstauvorrichtung einen zweiten Entriegelungsmechanismus auf, so dass die Festlegung des Aufnahmebereichs an dem Montagebereich über zwei voneinander unabhängige Entriegelungsmechanismen erfolgen kann. Hierdurch ergibt sich eine gewisse Redundanz, so dass ein unerwünschtes Lösen selbst bei Ausfall eines der beiden Entriegelungsmechanismen nicht zu befürchten steht. Ferner ergibt sich aufgrund der beiden über die Entriegelungsmechanismen bereit gestellten Formschlussverbindungen eine Art Zwei-Punkt-Befestigung. Es können auch mehr als zwei Entriegelungsmechanismen vorgesehen sein. Eine Ausgestaltung mit zwei Entriegelungsmechanismen bietet jedoch den Vorteil, dass diese gleichzeitig von einem Bediener jeweils mit einer Hand betätigt werden können.

Erfindungsgemäß sind bei einer Verstauvorrichtung mit mehreren Entriegelungsmechanismen deren Verriegelungsrichtungen quer zueinander ausgerichtet. Besonders bevorzugt ist, wenn die Verrieglungsrichtungen zueinander senkrecht oder zueinander gegenläufig ausgerichtet sind. Über die quer zueinander ausgerichteten Verriegelungsrichtungen kann Formschluss in mehreren Richtungen erfolgen, so dass der Aufnahmebereich in mehreren Richtungen gegenüber dem Montagebereich festgelegt werden kann. Besonders vorteilhaft ist es dabei, wenn alle Entriegelungsmechanismen als Riegelschieber ausgebildet sind, so dass das Trennen und/oder Verbinden der Bereiche erleichtert wird.

In bevorzugter Ausgestaltung ist der Aufnahmebereich an einem Aufnahmeelement und der Montagebereich an einem Montageelement angeordnet. Das Aufnahmeelement und das Montageelement können über den Entriegelungsmechanismus voneinander trennbar sein.

Von Vorteil ist in diesem Zusammenhang eine Ausgestaltung, bei welcher das Aufnahmeelement und/oder das Montageelement plattenförmig ausgebildet sind. Durch die plattenförmige Ausgestaltung des Aufnahmeelements und/oder des Montageelements wird eine flache Bauform der Verstauvorrichtung ermöglicht, so dass die Verstauvorrichtung als solche einen geringen Platzbedarf aufweist.

In konstruktiver Ausgestaltung ist der Entriegelungsmechanismus an dem Aufnahmeelement und die Riegelfalle an dem Montageelement angeordnet. Alternativ kann der Entriegelungsmechanismus an dem Montageelement und die Riegelfalle an dem Aufnahmeelement angeordnet sein.

Ferner hat es sich vor allem bei der Nachrüstung bereits im Einsatz befindlicher Verstauvorrichtungen als vorteilhaft erwiesen, wenn das Aufnahmeelement eine Aufnahmeplatte und eine Entriegelungsplatte aufweist, die lösbar miteinander verbunden sind, insbesondere über eine Schraubverbindung. Eine derartige Ausgestaltung ist dann von Vorteil, wenn die Erfindung mit einer bereits vorhandenen Aufnahmeplatte verwirklicht werden soll, die in diesem Fall an der Entriegelungsplatte beispielsweise durch Verschrauben befestigt werden kann.

In diesem Zusammenhang ist es konstruktiv vorteilhaft, wenn der Aufnahmebereich an der Aufnahmeplatte und der Entriegelungsmechanismus an der Entriegelungsplatte angeordnet ist. Durch das Verbinden der Aufnahmeplatte mit der Entriegelungsplatte kann der Entriegelungsmechanismus auf einfache Weise auch bei konventionellen Verstauvorrichtungen nachgerüstet werden.

Gemäß einer bevorzugten Ausgestaltung ist vorgesehen, dass das Aufnahmeelement und das Montageelement miteinander steckverbindbar ausgebildet sind, wodurch eine schnell zu verbindende und schnell zu entriegelnde Verbindung erreicht werden kann.

Eine vorteilhafte Ausgestaltung sieht vor, dass die Steckverbindung von einem an dem Aufnahmeelement angeordneten Einsteckelement und einer an dem Montageelement angeordneten Einsteckaufnahme gebildet wird. Über das Einsteckelement und die Einsteckaufnahme kann der Aufnahmebereich gegenüber dem Montagebereich festgelegt werden.

Das Einsteckelement ist bevorzugt winkelförmig und die Einsteckaufnahme nach Art einer korrespondierend gestalteten Aufnahmeöffnung ausgebildet. In einer eingesteckten Stellung kann das Einsteckelement in die Aufnahmeöffnung eingreifen und/oder einen Randbereich der Aufnahmeöffnung hintergreifen. Ein Schenkel des winkelförmigen Einsteckelements kann auf den Rand der Aufnahmeöffnung aufgelegt werden, der andere Schenkel kann in die Aufnahmeöffnung eingeführt werden.

Vorteilhaft ist eine Ausgestaltung, bei welcher der Entriegelungsmechanismus oder beide Entriegelungsmechanismen oberhalb des Einsteckelements angeordnet sind. Durch eine derartige Anordnung ergibt sich ein Vorteil beim Verriegeln des Aufnahmebereichs mit dem Montagebereich. Zum Verriegeln kann zunächst das Einsteckelement in die Einsteckaufnahme eingesteckt werden und dann der Entriegelungsmechanismus verriegelt werden. Umgekehrt kann zum Entriegeln zunächst der Entriegelungsmechanismus entriegelt und dann das Einsteckelement aus der Einsteckaufnahme herausgezogen werden.

Bei Verstauvorrichtungen, die in militärischen Fahrzeugen Anwendung finden, kann eine Fußstütze vorgesehen werden, auf welche sich ein Fahrzeugführer beim Steuern des Fahrzeugs stellen kann. Dies ermöglicht dem Fahrzeugführer eine erhöhte Sichtposition, beispielsweise um beim Steuern des Fahrzeugs aus einer Luke des Fahrzeugs zu blicken. Bevorzugt ist an dem Aufnahmeelement zusätzlich zum Ausrüstungsgegenstand eine Fußstütze aufgenommen, so dass die Fußstütze in einem Schritt zusammen mit dem Aufnahmebereich von dem Montagebereich getrennt werden kann. Besonders bevorzugt ist die Fußstütze gegenüber dem Aufnahmeelement schwenkbar, so dass die Fußstütze in eine platzsparende eingeschwenkte Stellung überführt werden kann, sofern sie nicht benötigt wird.

Vorteilhaft ist es ferner, wenn die Verstauvorrichtung ein alternatives Aufnahmeelement zur Aufnahme eines anderen Ausrüstungsgegenstands aufweist, welches wahlweise mit dem Montageelement verbindbar ist. Hierdurch wird ein schneller Austausch verschiedener Aufnahmebereiche und damit eine Anpassung des Fahrzeugs an missionsspezifische Vorgaben ermöglicht. Beispielsweise kann ein Aufnahmeelement mit einem als Waffenhalterung ausgebildeten Aufnahmebereich mit wenigen Handgriffen gegen ein alternatives Aufnahmeelement mit einem als Munitionskiste ausgebildeten Aufnahmebereich ausgetauscht werden.

Weitere Vorteile und Einzelheiten der Erfindung sollen im Folgenden anhand eines in den Zeichnungen dargestellten Ausführungsbeispiels erläutert werden. Darin zeigen:
- Fig. 1: eine Explosionsdarstellung einer im Innenraum eines Fahrzeugs angeordneten Verstauvorrichtung und
- Fig. 2: eine vergrößerte Detaildarstellung der Fig. 1 zur Veranschaulichung des Entriegelungsmechanismus.

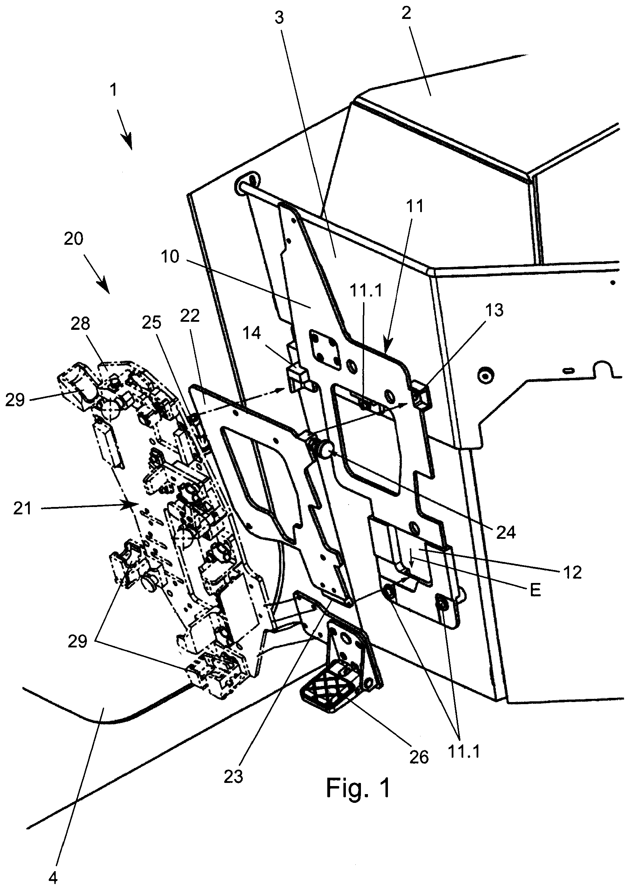

In der Fig. 1 ist ein Teil des Innenraums eines militärischen Fahrzeugs 2 in perspektivischer Ansicht dargestellt.

Das Fahrzeug 2 weist eine seitliche Türöffnung 4 zum Einstieg in den Innenraum auf, wobei im Bereich vor der Türöffnung 4 an einer Innenwandung 3 des Fahrzeugs 2 eine Verstauvorrichtung 1 angeordnet ist, über die ein als Handfeuerwaffe ausgebildeter Ausrüstungsgegenstand lagegesichert verstaut werden kann.

Die Anordnung der Verstauvorrichtung im Einstiegsbereich der Türöffnung 4 bietet den Vorteil, dass die Besatzungsmitglieder die Waffe unmittelbar beim Verlassen des Fahrzeugs 1 greifen und dieses dann kampfbereit verlassen können. In Notfällen kann es jedoch auch erforderlich werden, verletzte Besatzungsmitglieder des Fahrzeugs 2 durch die Türöffnung 4 zu bergen, wobei sich die Anordnung einer Verstauvorrichtung 1 im Einstiegsbereich der Türöffnung 4 als hinderlich erweisen kann. Denn aufgrund der beengten Platzverhältnisse gestalten sich solche Bergungsmaßnahmen insbesondere bei bewusstlosen Personen oftmals schwierig.

Um die Platzverhältnisse im Bereich der Montagestelle der Verstauvorrichtung 1 verbessern zu können, sind gemäß der Erfindung an der Verstauvorrichtung 1 Maßnahmen getroffen, die es ermöglichen, einen Teil der Verstauvorrichtung 1 mit wenigen Handgriffen von der Fahrzeuginnenwandung 3 zu trennen, so dass die durch die Verstauvorrichtung 1 beim Bergevorgang gebildete Engstelle erheblich verringert wird. Hierdurch können auf schnelle und einfache Weise verbesserte Platzverhältnisse geschaffen werden, welche die Bergungsmaßnahmen deutlich vereinfachen.

Die Verstauvorrichtung 1 besteht aus einem plattenförmigen Aufnahmeelement 20, welches einen Aufnahmebereich 21 zur Aufnahme einer Waffe aufweist, und einem plattenförmigen Montageelement 10, welches den Montagebereich 11 zur Montage der Verstauvorrichtung 1 an der Wand 3 des Fahrzeugs 2 aufweist.

Das Aufnahmeelement 20 ist beim Ausführungsbeispiel mehrteilig ausgebildet und weist eine Aufnahmeplatte 28 sowie eine mit der Aufnahmeplatte 28 verbundene Entriegelungsplatte 22 auf, an welcher noch näher zu beschreibende Entriegelungsmechanismen 24, 25 angeordnet sind. Gemäß dem Ausführungsbeispiel sind die Aufnahmeplatte 28 und die Entriegelungsplatte 22 lösbar über Schrauben verbunden. Alternativ können die Aufnahmeplatte 28 und die Entriegelungsplatte 22 fest verbunden sein. Gemäß einer weiteren Alternative können die Aufnahmeplatte 28 und die Entriegelungsplatte 22 einstückig ausgebildet sein.

An der Aufnahmeplatte 28 ist der Aufnahmebereich 21 vorgesehen, welcher an die Aufnahme eines als Handfeuerwaffe ausgebildeten und in der Fig. 1 nicht dargestellten Ausrüstungsgegenstands angepasst ist. Auf der Aufnahmeplatte 28 sind mehrere Halterungselemente 29 lösbar angeordnet. Über die Halterungselemente 29 kann der Ausrüstungsgegenstand lagegesichert gehalten werden. Die Halterungselemente 29 sind gegenüber der Aufnahmeplatte 28 versetzbar ausgebildet, so dass über das Versetzen der Halterungselemente 29 eine Anpassung an unterschiedliche Ausrüstungsgegenstände, insbesondere unterschiedliche Handfeuerwaffen, erfolgen kann.

An dem plattenförmigen Montageelement 10 ist ein Montagebereich 11 zur Montage an der Innenwandung 3 des militärischen Fahrzeugs 2 vorgesehen. In dem Montagebereich 11 wird das Montageelement 10 bzw. der Montagebereich 11 über mehrere Schrauben 11.1 kraftschlüssig an der Innenwandung 3 befestigt.

Um einen Ausrüstungsgegenstand lagegesichert verstauen zu können, wird zunächst der Aufnahmebereich 21 der Verstauvorrichtung 1 mit dem Montagebereich 11 verbunden, wonach dann ein Ausrüstungsgegenstand in dem Aufnahmebereich 21 verstaut werden kann.

Um den von der Verstauvorrichtung 2 eingenommenen Raum im Bereich vor der Türöffnung 4 mit wenigen Handgriffen freigeben zu können, ist der Aufnahmebereich 21 von dem Montagebereich 11 über zwei Entriegelungsmechanismen 24, 25 voneinander trennbar angeordnet. Die Entriegelungsmechanismen 24, 25 sind manuell entriegelbar ausgebildet. Es ist daher kein Werkzeug erforderlich, um den Aufnahmebereich 21 von dem Fahrzeug 2 zu trennen. Insofern bilden die Entriegelungsmechanismen 24, 25 jeweils eine Schnelltrennvorrichtung für den Aufnahmebereich 21. Der Aufnahmebereich 21 kann zusammen mit dem Ausrüstungsgegenstand aus dem Bereich vor der Türöffnung 4 entfernt werden, so dass der Bereich der Türöffnung 4 für Bergungsmaßnahmen zur Verfügung steht.

Die Entriegelungsmechanismen 24, 25 der Verstauvorrichtung 1 sind derart ausgebildet, dass sie bei Betätigung einen Formschluss zwischen dem Montageelement 10 mit dem Montagebereich 11 und dem Aufnahmeelement 20 mit dem Aufnahmebereich 21 herstellen bzw. lösen können. Insofern bilden die an dem Aufnahmeelement 20 angeordneten Entriegelungsmechanismen 24, 25 Formschlusselemente, welche in Eingriff mit entsprechenden Formschlusselementen 13, 14 des Montageelements 10 gebracht werden können.

Wie der Darstellung in Fig. 1 weiter entnommen werden kann, ist an dem Aufnahmeelement 20 ein starres Einsteckelement 23 nach Art einer Einstecklasche ausgebildet. Das Einsteckelement 23 kann zum Verbinden des Aufnahmeelements 20 mit dem Montageelement 10 in eine Einsteckaufnahme 12 des Montageelements 10 eingesteckt werden. Das Einstecken kann in einer Richtung E von oben her erfolgen, vgl. Fig. 1. Insofern ist das Aufnahmeelement 20 mit dem Montageelement 10 steckverbindbar. Das Einsteckelement 23 ist winkelförmig ausgebildet. Es weist in seinem Endbereich zwei Schenkel auf, von denen zum Verbinden der Elemente 10, 20 ein Schenkel auf einen Randbereich der Einsteckaufnahme 12 aufgelegt wird und ein zweiter Schenkel in eine Aufnahmeöffnung der Einsteckaufnahme 12 eintaucht. In einer verbundenen Stellung hintergreift der zweite Schenkel den Rand der Einsteckaufnahme 12.

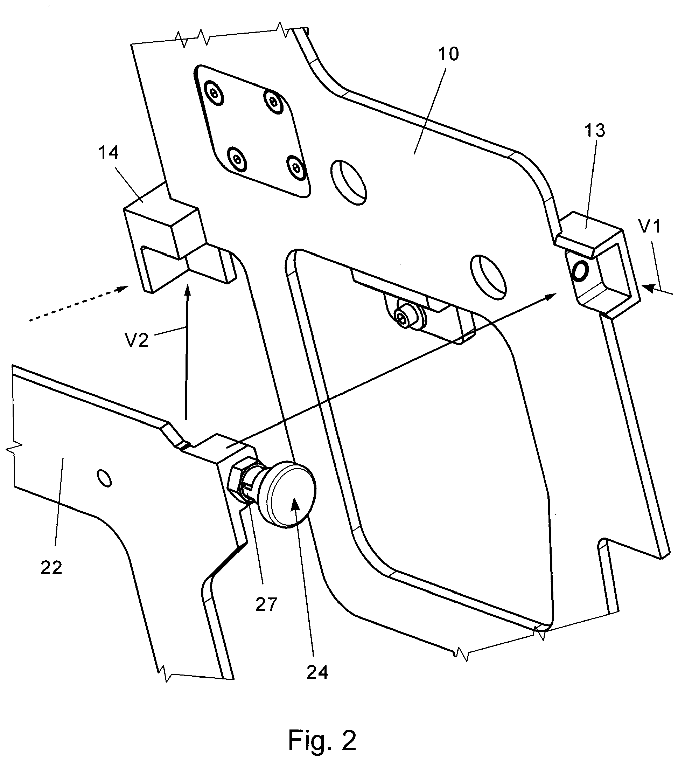

Die Entriegelungsmechanismen 24, 25 weisen, wie dies auch die vergrößerte Ansicht in Fig. 2 erkennen lässt, jeweils einen bewegbaren Riegelschieber 27 auf und sind oberhalb des starren Einsteckelements 23 an der Entriegelungsplatte 22 des Aufnahmeelements 20 angeordnet. Über die bewegbaren Riegelschieber 27 kann das über das Einsteckelement 23 und die Einsteckaufnahme 12 mit dem Montageelement 10 verbundene Aufnahmeelement 20 an dem Montageelement 10 festgelegt werden.

Die Riegelschieber 27 sind zwischen einer Riegelstellung, in welcher das Aufnahmeelement 20 und das Montageelement 10 gegeneinander verriegelt sind, und einer Offenstellung, in welcher das Montageelement 10 und das Aufnahmeelement 20 entriegelt sind, entgegen der Kraft einer sich spannenden Feder bewegbar. Aufgrund der Federkraft können die Riegelschieber 27 in der formschlüssigen Riegelstellung einrasten. Die an dem Aufnahmeelement 20 angeordneten Riegelschieber 27 der Entriegelungsmechanismen 24, 25 korrespondieren mit entsprechenden Riegelfallen 13, 14 an dem Montageelement 10. Die Riegel greifen in der Verriegelungsstellung in Öffnungen der Riegelfallen 13, 14 ein. Der eine Riegelschieber 27 des Entriegelungsmechanismus 24 ist horizontal, der Riegelschieber 27 des Entriegelungsmechanismus 25 ist vertikal angeordnet. Die Riegelschieber 27 weisen zwei Verriegelungsrichtungen V1, V2 auf, welche senkrecht zueinander ausgerichtet sind, so dass das Aufnahmeelement 20 und das Montageelement 10 bezüglich mehrerer Raumrichtungen formschlüssig verbunden werden können, vgl. Fig. 2.

Zum Verriegeln des Aufnahmebereichs 21 an dem Montagebereich 11 wird zunächst das Aufnahmeelement 20 mit seinem starren Einsteckelement 23 in die Einsteckaufnahme 12 des Montageelements 10 eingesteckt. Das Aufnahmeelement 20 kann in diesem Zustand in einem geringen Winkelbereich gegenüber dem Montageelement 10 geschwenkt werden. In einem weiteren Schritt werden dann die beiden Riegelschieber 27 entgegen der Federkraft in ihre Offenstellung überführt. Das Aufnahmeelement 20 wird derart in Richtung des Montageelements 10 geschwenkt, dass das Aufnahmeelement 20 und das Montageelement 10 parallel aneinander anliegen. Dann werden die Riegelschieber 27 unterstützt durch die Federkraft, in die Riegelfallen 13, 14 an dem Montageelement 10 eingeführt. Die Riegelschieber 27 rasten ein und verriegeln den Aufnahmebereich 21 gegenüber dem Montagebereich 11 der Verstauvorrichtung.

Zum Entriegeln werden zunächst die beiden Riegelschieber 27 manuell entgegen der Federkraft aus den jeweiligen Riegelfallen 13, 14 des Montageelements 10 herausgezogen. Das Aufnahmeelement 20 mit dem Aufnahmebereich 21 wird leicht gegenüber dem Montagebereich 11 geschwenkt. In einem weiteren Schritt wird das Aufnahmeelement 20 dann mit seinem starren Einsteckelement 23 aus der Einsteckaufnahme 12 des Montageelements 10 heraus gezogen. Es ergibt sich somit ein ohne zusätzliches Werkzeug ausführbarer Trennungsvorgang, der das Trennen des Aufnahmebereichs 21 von der Innenwandung 3 des Fahrzeugs 2 erleichtert.

Wie der Darstellung in Fig. 1 weiter entnommen werden kann, ist an dem Aufnahmebereich 21 eine Fußstütze 26 angeordnet, auf welche sich ein Fahrzeugführer beim Steuern des Fahrzeugs 2 stellen kann. Dies ermöglicht dem Fahrzeugführer eine erhöhte Sichtposition, beispielsweise um beim Steuern des Fahrzeugs 2 aus einer Luke des Fahrzeugs 2 zu blicken. Die Fußstütze 26 ist gegenüber dem Aufnahmeelement 20 schwenkbar, so dass die Fußstütze 26 in eine platzsparende eingeschwenkte Stellung überführt werden kann, sofern sie nicht benötigt wird.

Die vorstehend beschriebene Verstauvorrichtung 1 weist einen Entriegelungsmechanismus 24, 25 auf, über welchen der Aufnahmebereich 21 und der Montagebereich 11 voneinander trennbar angeordnet sind. Somit kann der Aufnahmebereich 21 durch einen mit wenigen Handgriffen durchführbaren Entriegelungsvorgang von dem Montagebereich 11 getrennt werden. Es ist daher nicht erforderlich, die gesamte Verstauvorrichtung zu demontieren. Der deutliche weniger raumgreifende Montagebereich 11 kann an der Montagestelle verbleiben, da dies zu keiner nennenswerten Beeinträchtigung der Platzverhältnisse führt. Somit ergibt sich eine Verstauvorrichtung 1, bei welcher sich in kürzester Zeit verbesserte Platzverhältnisse schaffen lassen.

Der vorstehend beschriebene Entriegelungsmechanismus 24, 25 bringt den weiteren Vorteil mit sich, dass an dem objektseitigen Montagebereich 10 wahlweise verschiedene Aufnahmeelemente 20 angeordnet werden können.

Beispielsweise kann das in der Fig. 1 dargestellte zur Aufnahme einer Handfeuerwaffe ausgebildete Aufnahmeelement 20 gegen ein Aufnahmeelement ausgetauscht werden, welches zur Aufnahme von Munition oder anderer Ausrüstungsgegenstände geeignet ist. Hierdurch kann die für das Einrüsten neuer Ausrüstungsgegenstände erforderliche Rüstzeit verkürzt werden. Es ist erforderlich, dass die verschiedenen Aufnahmeelemente 20 einen Entriegelungsmechanismus 24, 25 aufweisen, der mit dem entsprechenden Riegelfallen 13, 14 des Montageelements 10 korrespondiert. Von Vorteil ist eine Ausgestaltung, bei der die Entriegelungsmechanismen der verschiedenen Aufnahmeelemente 20 identisch ausgebildet sind.

### Bezugszeichen:

- 1: Verstauvorrichtung
- 2: Fahrzeug
- 3: Innenwandung
- 4: Türöffnung
- 10: Montageelement
- 11: Montagebereich
- 11.1: Schraube
- 12: Einsteckaufnahme
- 13: Riegelfalle
- 14: Riegelfalle
- 20: Aufnahmeelement
- 21: Aufnahmebereich
- 22: Entriegelungsplatte
- 23: Einsteckelement
- 24: Entriegelungsmechanismus
- 25: Entriegelungsmechanismus
- 26: Fußstütze
- 27: Riegelschieber
- 28: Aufnahmeplatte
- 29: Halterungselemente

- E: Richtung
- V1, V2: Richtungen

## Patentansprüche

1. Verstauvorrichtung zur lagegesicherten Verstauung eines Ausrüstungsgegenstands, insbesondere einer Waffe, an einem Objekt (2) mit einem Aufnahmebereich (21) zur Aufnahme des Ausrüstungsgegenstands und einem Montagebereich (11) zur Montage der Verstauvorrichtung (1) an dem Objekt (2),
**dadurch gekennzeichnet,**
**dass** der Aufnahmebereich (21) und der Montagebereich (11) über einen Entriegelungsmechanismus (24) voneinander trennbar angeordnet sind, wobei der Entriegelungsmechanismus (24) einen bewegbaren Riegelschieber (27) aufweist, der mit einer feststehenden Riegelfalle (13) zusammenwirkt, wobei ein zweiter Entriegelungsmechanismus (25) vorgesehen ist und wobei die Verriegelungsrichtungen (V1, V2) der Entriegelungsmechanismen (24, 25) quer zueinander ausgerichtet sind.

2. Verstauvorrichtung nach Anspruch 1, **dadurch gekennzeichnet, dass** der Entriegelungsmechanismus (24) derart ausgebildet ist, dass er bei Betätigung einen Formschluss zwischen dem Aufnahmebereich (21) und dem Montagebereich (11) löst.

3. Verstauvorrichtung nach Anspruch 1 oder Anspruch 2, **dadurch gekennzeichnet, dass** der Riegelschieber (27) zwischen einer Riegelstellung und einer Offenstellung entgegen der Kraft einer sich spannenden Feder bewegbar ist.

4. Verstauvorrichtung nach einem der vorhergehenden Ansprüche,
**dadurch gekennzeichnet, dass** die Verriegelungsrichtungen (V1, V2) zueinander senkrecht oder zueinander gegenläufig ausgerichtet sind.

5. Verstauvorrichtung nach einem der vorhergehenden Ansprüche,
**dadurch gekennzeichnet, dass** der Aufnahmebereich (21) an einem Aufnahmeelement (20) und der Montagebereich (11) an einem Montageelement (10) angeordnet ist.

6. Verstauvorrichtung nach Anspruch 5, **dadurch gekennzeichnet, dass** der Entriegelungsmechanismus (24, 25) an dem Aufnahmeelement (20) und die Riegelfalle (13, 14) an dem Montageelement (10) angeordnet ist.

7. Verstauvorrichtung nach einem der Ansprüche 5 oder 6, **dadurch gekennzeichnet, dass** das Aufnahmeelement (20) eine Aufnahmeplatte (28) und eine Entriegelungsplatte (22) aufweist, die lösbar miteinander verbunden sind, insbesondere über eine Schraubverbindung.

8. Verstauvorrichtung nach Anspruch 7, **dadurch gekennzeichnet, dass** der Aufnahmebereich (21) an einer Aufnahmeplatte (28) und der Entriegelungsmechanismus an (24, 25) der Entriegelungsplatte (22) angeordnet ist.

9. Verstauvorrichtung nach einem der Ansprüche 5 bis 8, **dadurch gekennzeichnet, dass** das Aufnahmeelement (20) und das Montageelement (10) miteinander steckverbindbar sind.

10. Verstauvorrichtung nach Anspruch 9, **dadurch gekennzeichnet, dass** die Steckverbindung von einem an dem Aufnahmeelement (20) angeordneten Einsteckelement (23) und einer an dem Montageelement (10) angeordneten Einsteckaufnahme (12) gebildet wird.

11. Verstauvorrichtung nach Anspruch 10, **dadurch gekennzeichnet, dass** das Einsteckelement (23) winkelförmig und die Einsteckaufnahme (12) nach Art einer korrespondierend gestalteten Aufnahmeöffnung ausgebildet ist.

12. Verstauvorrichtung nach einem der Ansprüche 10 oder 11, **dadurch gekennzeichnet, dass** der Entriegelungsmechanismus (24) oder beide Entriegelungsmechanismen (24, 25) oberhalb des Einsteckelements (23) angeordnet sind.

13. Verstauvorrichtung nach einem der vorhergehenden Ansprüche, **gekennzeichnet durch** eine an dem Aufnahmeelement (20) zusätzlich zum Aufnahmebereich (21) vorgesehene Fußstütze (26).

## Claims

1. Stowage device for positionally secured stowing of an item of equipment, particularly a weapon, on an object (2), with a receiving region (21) for receiving the item of equipment and a mounting region (11) for mounting the stowage device (1) on the object (2), **characterized in that** the receiving region (21) and the mounting region (11) are arranged so as to be separable from each other via an unlocking mechanism (24), wherein the unlocking mechanism (24) has a movable latch slide (27) which interacts with a fixed latch catch (13), wherein a second unlocking mechanism (25) is provided, and wherein the locking directions (V1, V2) of the unlocking mechanisms (24, 25) are oriented transversely with respect to each other.

2. Stowage device according to Claim 1, **characterized in that** the unlocking mechanism (24) is designed in such a manner that, upon actuation, it releases a form-fitting connection between the receiving region (21) and the mounting region (11).

3. Stowage device according to Claim 1 or Claim 2, **characterized in that** the latch slide (27) is movable between a latching position and an open position counter to the force of a tensioning spring.

4. Stowage device according to one of the preceding claims, **characterized in that** the locking directions (V1, V2) are oriented perpendicularly to each other or in an opposed manner with respect to each other.

5. Stowage device according to one of the preceding claims, **characterized in that** the receiving region (21) is arranged on a receiving element (20) and the mounting region (11) is arranged on a mounting element (10).

6. Stowage device according to Claim 5, **characterized in that** the unlocking mechanism (24, 25) is arranged on the receiving element (20) and the latch catch (13, 14) is arranged on the mounting element (10).

7. Stowage device according to either of Claims 5 and 6, **characterized in that** the receiving element (20) has a receiving plate (28) and an unlocking plate (22), which are connected releasably to each other, in particular via a screw connection.

8. Stowage device according to Claim 7, **characterized in that** the receiving region (21) is arranged on a receiving plate (28) and the unlocking mechanism (24, 25) is arranged on the unlocking plate (22).

9. Stowage device according to one of Claims 5 to 8, **characterized in that** the receiving element (20) and the mounting element (10) are connectable to each other by plugging together.

10. Stowage device according to Claim 9, **characterized in that** the plug-type connection is formed by a plug-in element (23) arranged on the receiving element (20) and a plug-in receptacle (12) arranged on the mounting element (10).

11. Stowage device according to Claim 10, **characterized in that** the plug-in element (23) is formed in an angular manner and the plug-in receptacle (12) is formed in the manner of a correspondingly designed receiving opening.

12. Stowage device according to either of Claims 10 and 11, **characterized in that** the unlocking mechanism (24) or the two unlocking mechanisms (24, 25) is or are arranged above the plug-in element (23).

13. Stowage device according to one of the preceding claims, **characterized by** a foot rest (26) provided in addition to the receiving region (21) on the receiving element (20).

## Revendications

1. Dispositif d'arrimage pour l'arrimage en position sûre d'un article d'équipement, en particulier d'une arme, sur un objet (2) avec une zone de réception (21) destinée à recevoir l'article d'équipement et avec une zone de montage (11) pour le montage du dispositif d'arrimage (1) sur l'objet (2), **caractérisé en ce que** la zone de réception (21) et la zone de montage (11) sont disposées de façon séparable l'une de l'autre au moyen d'un mécanisme de déverrouillage (24), dans lequel le mécanisme de déverrouillage (24) présente un verrou mobile (27) qui coopère avec une gâche de verrouillage fixe (13), dans lequel il est prévu un second mécanisme de déverrouillage (25) et dans lequel les directions de verrouillage (V1, V2) des mécanismes de déverrouillage (24, 25) sont orientés transversalement l'un à l'autre.

2. Dispositif d'arrimage selon la revendication 1, **caractérisé en ce que** le mécanisme de déverrouillage (24) est configuré de telle manière que, lorsqu'il est actionné, il libère une liaison par emboîtement entre la zone de réception (21) et la zone de montage (11).

3. Dispositif d'arrimage selon la revendication 1 ou la revendication 2, **caractérisé en ce que** le verrou (27) est mobile entre une position de verrouillage et une position ouverte contre la force d'un ressort qui se tend.

4. Dispositif d'arrimage selon l'une quelconque des revendications précédentes, **caractérisé en ce que** les directions de verrouillage (V1, V2) sont orientés perpendiculairement l'un à l'autre ou en sens contraire l'un de l'autre.

5. Dispositif d'arrimage selon l'une quelconque des revendications précédentes, **caractérisé en ce que** la zone de réception (21) est disposée sur un élément de réception (20) et la zone de montage (11) est disposée sur un élément de montage (10).

6. Dispositif d'arrimage selon la revendication 5, **caractérisé en ce que** le mécanisme de déverrouillage (24, 25) est disposé sur l'élément de réception (20) et la gâche de verrouillage (13, 14) est disposée sur l'élément de montage (10).

7. Dispositif d'arrimage selon une des revendications 5 ou 6, **caractérisé en ce que** l'élément de réception (20) présente une plaque de réception (28) et une plaque de déverrouillage (22), qui sont assemblées l'une à l'autre de façon séparable, en particulier au moyen d'un assemblage vissé.

8. Dispositif d'arrimage selon la revendication 7, **caractérisé en ce que** la zone de réception (21) est disposée sur une plaque de réception (28) et le mécanisme de déverrouillage (24, 25) est disposé sur la plaque de déverrouillage (22).

9. Dispositif d'arrimage selon l'une quelconque des revendications 5 à 8, **caractérisé en ce que** l'élément de réception (20) et l'élément de montage (10) peuvent être assemblés l'un à l'autre par insertion.

10. Dispositif d'arrimage selon la revendication 9, **caractérisé en ce que** l'assemblage par insertion est formé par un élément d'insertion (23) disposé sur l'élément de réception (20) et un logement d'insertion (12) disposé sur l'élément de montage (10).

11. Dispositif d'arrimage selon la revendication 10, **caractérisé en ce que** l'élément d'insertion (23) est réalisé en forme de cornière et le logement d'insertion (12) est réalisé à la manière d'une ouverture de réception de forme correspondante.

12. Dispositif d'arrimage selon une des revendications 10 ou 11, **caractérisé en ce que** le mécanisme de déverrouillage (24) ou les deux mécanismes de déverrouillage (24, 25) est/sont disposé(s) au-dessus de l'élément d'insertion (23).

13. Dispositif d'arrimage selon l'une quelconque des revendications précédentes, **caractérisé par** un pied d'appui (26) prévu sur l'élément de réception (20) en plus de la zone de réception (21).
